(19) **Europäisches Patentamt**
**European Patent Office**
**Office européen des brevets**

(11) **EP 4 557 188 A1**

(12) **EUROPEAN PATENT APPLICATION**

(43) Date of publication:
**21.05.2025 Bulletin 2025/21**

(21) Application number: **24204891.6**

(22) Date of filing: **07.10.2024**

(51) International Patent Classification (IPC):
**G06Q 10/04** (2023.01)    **G06N 20/00** (2019.01)
**G06Q 10/08** (2024.01)    **G06Q 50/40** (2024.01)

(52) Cooperative Patent Classification (CPC):
**G06Q 10/04; G06N 20/00; G06Q 10/08;
G06Q 50/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.11.2023 IN 202341077874**

(71) Applicant: **Hitachi, Ltd.
Tokyo 100-8280 (JP)**

(72) Inventors:
• **SHARMA, Ankit
560055 Bangalore (IN)**
• **KUMAR N, Vinoth
560055 Bangalore (IN)**
• **TELANG, Geet Tapan
560055 Bangalore (IN)**
• **SAMON, Thiruvengadam
560055 Bangalore (IN)**

(74) Representative: **Mewburn Ellis LLP
Aurora Building
Counterslip
Bristol BS1 6BX (GB)**

(54) **A METHOD AND SYSTEM FOR PREDICTING PASSENGER FLOW IN A TRANSPORTATION SYSTEM**

(57)    The present disclosure relates to a method and system for predicting passenger flow in a transportation system. The system receives historical travel data associated with a plurality of passengers of a transport to determine an acceptable delay time and an acceptable transport congestion. The system estimates total number of waiting passengers at a station, based on the historical travel data. The system estimates a delay time and congestion within the transport, based on the historical travel data. The system determines a switching probability to switch the transport, for each of one or more waiting passengers. Further, the system determines a risk of dropping out of the one or more passengers, from boarding the transport, for the station. Thereafter, the system predicts a passenger flow at the station, based on the estimated total number of one or more waiting passengers and the risk associated with the one or more waiting passengers.

Fig. 2

EP 4 557 188 A1

**Description**

**TECHNICAL FIELD**

The present disclosure generally relates to the field of passenger flow management. More particularly, the present disclosure relates to a method and system for predicting passenger flow in a transportation system.

**BACKGROUND**

Major cities around the world are facing a problem of traffic congestion due to rapid urbanization and population growth. Therefore, many cities are looking out for solutions to improve the service quality of public transportation so as to make public transportation the preferred commuting choice for their residents. However, there may be significant challenges in providing comfortable and good service quality in a transportation system. For example, the transportation system experiences situations when a transport may not operate as planned due to unexpected events. Therefore, to manage the transportation system, an operator may constantly monitor a status of operation delays and adjust operation intervals to reduce an impact on passengers according to the situation. In order to adjust the operation intervals accurately, it is important to predict an accurate operation schedule to grasp possible troubles in the future.

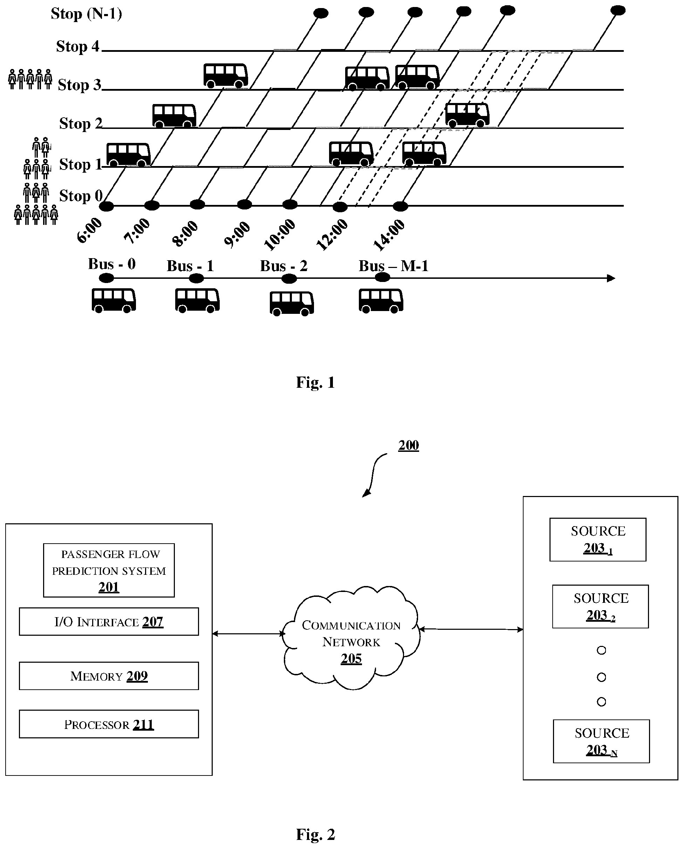

Most significant factors that conventional techniques rely upon to improve travel experience in public transportation correspond to passenger flow and delays associated with the transport. These techniques compute the passenger flow and the transport delays based on sensor data captured by variety of sensors including but not limited to, cameras and weight sensors installed in the transport to measure a crowd level, Global Positioning System (GPS) tracker to compute delay of the transport based on location details, and the like. However, the conventional techniques consider only a current state of the transport while computing the passenger flow and the transport delays. Due to this approach, the operators may be misled if they believe that the transport has more capacity or no capacity to accommodate the passengers at a next station. Therefore, this may lead to overcrowding or fewer passengers boarding the transport. For example, **Fig. 1** illustrates an exemplary dispatch plan created by an operator in existing systems, based on sensor data associated with the current state of the transport. The sensor data is received from aforementioned sensors. Herein, the dispatch plan considers even inconvenienced passengers as waiting passengers at upcoming stations. Hence, in conventional techniques, achieving optimal results is not possible as the estimated passenger flow and the transport delay consider only the current state of the transport.

Existing approaches for determining the passenger flow are performed through various aforementioned sensors. However, it does not determine a future state of the transport when the transport arrives at next station and when the passengers wish to switch the transport. Based on solutions provided by the existing approaches, inconvenienced passengers are also included while determining the passenger flow. This leads to an assumption that the inconvenienced passengers may wait and board the transport even if the transport is delayed indefinitely. Further, the existing approaches are not cost efficient as they rely on aforementioned sensors which are expensive.

The information disclosed in this background of the disclosure section is only for enhancement of understanding of the general background of the invention and should not be taken as an acknowledgement or any form of suggestion that this information forms the prior art already known to a person skilled in the art.

**SUMMARY**

In an embodiment, the present disclosure discloses a method of predicting passenger flow in a transportation system. The method comprises receiving historical travel data associated with a plurality of passengers of a transport, from one or more sources to determine an acceptable delay time and an acceptable transport congestion, associated with each of the plurality of passengers. The method comprises estimating total number of waiting passengers at a station, based on the historical travel data associated with one or more passengers of the plurality of passengers waiting at the station for boarding the transport. The method comprises estimating a delay time of the transport to arrive at the station and congestion within the transport, based on the historical travel data. Furthermore, the method comprises determining a switching probability to switch the transport to an alternate transport, for each of one or more waiting passengers at the station, based on the delay time, the congestion within the transport, the acceptable delay time, and the acceptable transport congestion. The method comprises determining a risk of dropping out of the one or more passengers of the plurality of passengers, from boarding the transport, for the station, by aggregating the switching probability associated with each of the one or more waiting passengers. Thereafter, the method comprises predicting the passenger flow at the station, based on the estimated total number of one or more waiting passengers and the risk associated with the one or more waiting passengers.

In an embodiment, the present disclosure discloses a passenger flow prediction system for predicting passenger flow in a transportation system. The system comprises one or more processors and a memory. The one or more processors are configured to receive historical travel data associated with a plurality of passengers of a transport, from one or more sources to determine an acceptable delay time and an acceptable transport congestion, associated with each of the plurality of passengers. The one or more processors are configured to estimate total number of waiting passengers at a station, based on the historical travel data associated with one or more passengers of the plurality of passengers waiting at the station for boarding the transport. The one or more processors estimate a delay time of the transport to arrive at the station and congestion within the transport, based on the historical travel data. Further, the one or more processors are configured to determine a switching probability to switch the transport to an alternate transport, for each of one or more waiting passengers at the station. The switching probability is determined based on the delay time, the congestion within the transport, the acceptable delay time, and the acceptable transport congestion. Furthermore, the one or more processors are configured to determine a risk of dropping out of the one or more passengers of the plurality of passengers, from boarding the transport, for the station. The risk of dropping out is determined by aggregating the switching probability associated with each of the one or more waiting passengers. Thereafter, the one or more processors are configured to predict the passenger flow at the station, based on the estimated total number of one or more waiting passengers and the risk associated with the one or more waiting passengers.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE ACCOMPANYING DRAWINGS

The novel features and characteristics of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:

**Fig. 1** (prior art) illustrates an exemplary dispatch plan created by an operator with respect to conventional techniques;

**Fig. 2** illustrates an exemplary environment for predicting passenger flow in a transportation system in accordance with some embodiments of the present disclosure;

**Fig. 3** illustrates a detailed diagram of a passenger flow prediction system for predicting passenger flow in a transportation system, in accordance with some embodiments of the present disclosure;

**Fig. 4A-4C** show exemplary graphs for predicting passenger flow in a transportation system, in accordance with some embodiments of the present disclosure;

**Fig. 5** shows an exemplary flow chart illustrating method steps for predicting passenger flow in a transportation system, in accordance with some embodiments of the present disclosure; and

**Fig. 6** shows a block diagram of a general-purpose passenger flow prediction system for predicting passenger flow in a transportation system in accordance with embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

## DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

Traffic congestion in urban areas is a major problem that affects daily lives of millions of people. Inefficient public transportation systems exacerbate this problem by leading to overcrowding and delays. Therefore, accurately predicting passenger flow at transport stations is essential to address this issue and improve travel experience for commuters.

The present disclosure provides a method and a computing system for predicting passenger flow in a transportation system. In the present disclosure, a passenger flow prediction system receives historical travel data associated with passengers of a transport. The passenger flow prediction system estimates total number of waiting passengers at a station along with a delay time of the transport to arrive at the station and congestion within the transport. Further, a risk of dropping out of the passengers from boarding the transport from a station is determined. The risk of dropping out is determined by computing a switching probability to switch the transport to an alternate transport. The switching probability is computed based on the estimated delay time and congestion within the transport. Hence, the present disclosure considers the risk of the passengers dropping out due to delay or overcrowding to predict the passenger flow. Thus, the present disclosure provides an improved accuracy in passenger flow prediction and an efficient decision-making approach by considering the dropout risk of the passengers while setting-up short-term and long-term timetables for dispatching the transports, in transportation systems.

**Fig. 2** illustrates an exemplary environment 200 for predicting passenger flow in a transportation system, in accordance with some embodiments of the present disclosure. The environment 200 comprises a passenger flow prediction system 201 connected to one or more sources 203 (a source $203_1$, a source $203_2$, ...................and a source $203_N$, collectively referred as one or more sources 203). The one or more sources 203 interact with the passenger flow prediction system 201 through a communication network 205. The one or more sources 203 may include, but not limited to, a database comprising historic data, survey data and data received from third party Application Programming Interface (APIs), associated with the transportation system.

The passenger flow prediction system 201 may include Input/ Output (I/O) interface 207, a memory 209, and a processor 211. In some embodiments, the memory 209 may be communicatively coupled to the processor 211. The memory 209 stores instructions executable by the processor 211. The processor 211 may execute program components for executing user or system-generated requests. The I/O interface 207 is coupled with the processor 211 through which an input signal or/and an output signal is communicated. For example, historical travel data may be received from the one or more sources 203, via the I/O interface 207. In an embodiment, the passenger flow prediction system 201 may be implemented in the transportation system corresponding to a variety of computing systems, such as a laptop computer, a desktop computer, a Personal Computer (PC), a notebook, a smartphone, a tablet, a server, a network server, a cloud-based server, and the like.

The passenger flow prediction system 201 receives historical travel data of a plurality of passengers of a transport. The historical travel data is received from the one or more sources 203. The historical travel data may include transport status information and passenger location information. In an embodiment, the passenger location information may be obtained based on transaction information associated with previous trips taken by the passengers, predefined identifiers associated with user devices and tagging devices such as Radio Frequency Identification (RFID) tags which are carried by the passengers.

The historical travel data which includes the transport status information, and the transaction information are associated with historical trips of each of the plurality of passengers. The transport status information comprises but not limited to, location of the transport, weather information, traffic information, and historical congestion information associated with the transport when the passengers previously boarded the transport. In an embodiment, the transaction information comprises information associated with tickets obtained by the passengers on performing transactions. The passengers may be provided with the tickets on making payments for trip. In an embodiment, the passengers may make the payments through various means which may include, but not limited to, cash, Integrated Circuit (IC) cards, Radio Frequency Identification (RFID) cards for contactless payments, online means by using personal devices, smart ticketing systems associated with Bluetooth beacons and Global Positioning Systems (GPS), and the like.

In an embodiment, total number of IC card tickets, total number of Media Access Control (MAC) identifiers and RFID identifiers detected while leaving a corresponding station may be counted, to estimate the acceptable transport congestion. In an embodiment, GPS information may be used to track the location of the passengers, based on which the acceptable transport congestion may be estimated.

In an embodiment, the passenger location may be obtained based on transaction information which is generated when the passengers make payments by swiping or tapping their IC or RFID cards for paying ticket fares associated with their respective trips. Particularly, the information associated with tickets may comprise but not limited to, boarding station, destination station, cost of the ticket, time, and the like.

In an embodiment, the passenger location information may be obtained from the predefined identifiers associated with the user devices connected to wireless networks. For example, when the user device is connected to a Wireless-Fidelity (Wi-Fi), the MAC identifier is detected by networking systems associated with the corresponding station where the passenger is present.

In an embodiment, the passenger location information may be obtained from location information collected from tagging devices which may be associated with one or more objects carried by the passengers. For example, the passenger may carry the tagging device such as, an RFID tag to track their luggage while travelling. Therefore, the location information is obtained based on detecting RFID identifiers, by the networking systems associated with the corresponding station where the passenger is present.

Further, using the transport status information and the passenger location information, an acceptable delay time and an acceptable transport congestion associated with each of the plurality of passengers is determined. Thus, the acceptable delay time and the acceptable transport congestion are part of historic travel data. The acceptable delay time relates to a time period accepted by a passenger, during which the corresponding transport for which the passenger is waiting delays in arriving at a station. For example, the passenger may not board a bus when the time taken by the bus to arrive at the station exceeds than the acceptable delay time. Further, the acceptable transport congestion relates to a predefined percentage of crowd in the transport. For example, consider the bus arrives at the station within the acceptable delay time. However, the passenger decides not to board the bus as the crowd within the bus is greater than the predefined percentage of crowd that the passenger can withstand. Therefore, the acceptable delay time and the acceptable transport congestion correspond to predefined threshold values which are associated with each of the plurality of passengers. In an embodiment, the predefined threshold values associated with the acceptable delay time and the acceptable transport congestion are determined based on the transport status information and the passenger location information.

The passenger flow prediction system 201 estimates a total number of waiting passengers at the station based on the historical travel data associated with one or more passengers of the plurality of passengers waiting at the station for boarding the transport. Particularly, the passenger flow prediction system 201 uses the passenger location information comprising transaction information associated with the historical trips of each of the plurality of passengers to estimate the total number of waiting passengers. In an embodiment, the process of estimating the total number of waiting passengers is performed by identifying the one or more waiting passengers from one or more categories of passengers based on a predefined clustering technique such as, but not limited to, k-means clustering technique. A person skilled in the art may understand that any other clustering technique not mentioned herein explicitly may also be utilised for identifying the one or more waiting passengers from the one or more categories. Herein, the one or more categories of passengers may correspond to daily passengers and non-daily passengers. In an embodiment, the classification of the passengers is performed based on travelling hours preferred by the passengers.

Further, the passenger flow prediction system 201 estimates a delay time of the transport to arrive at the station and a congestion within the transport based on the historical travel data. Herein, the delay time and the congestion correspond to a future state of the transport. Therefore, the passenger flow prediction system 201 relies on historical delay and historical congestion to estimate the delay time and the congestion. The estimation is performed based on at least one of, a predefined statistical technique or a predefined machine learning technique. In an embodiment, the predefined machine learning techniques may include but are not limited to, Logistic Regression, K-Nearest Neighbour, Gaussian Naive Bayes, Decision Tree, Support Vector Machine, Random Forest, Gradient Boosted Tree, and the like.

Further, the passenger flow prediction system 201 may determine a switching probability which corresponds to the probability of switching the transport to an alternate transport. The switching probability is determined for each of the one or more waiting passengers at the station. The passenger flow prediction system 201 determines the switching probability based on the delay time, the congestion within the transport and the acceptable delay time and the acceptable transport congestion which are associated with the respective passengers. In an embodiment, the switching probability may be determined by counting at least one of, total number of MAC identifiers, Beacon identifiers, and RFID identifiers entering a station and exiting out of the same station, without boarding the transport.

The switching probability is determined based on an initial probability of switching the transport to the alternate transport. Particularly, the initial probability is determined based on a function of total number of historical transport switches and total historical trips that are associated with the respective one or more waiting passengers, as shown in equation (1) below.

$$P\left(Switch_{waiting\_passenger}\right)$$

$$= \frac{Total\ number\ of\ historical\ transport\ switches_{waiting\_passenger}}{Total\ historical\ trips_{waiting\_passenger}}$$

$$\ldots\ldots\ldots(1)$$

The total number of historical transport switches correspond to the number of times the transport is not boarded by a passenger due to various reasons. For example, when the passenger decides to switch to another transport such as a cab, due to delay in arrival of the transport the passenger wished to board, then this situation may correspond to one of the switches of the total number of historical transport switches. In another example, if the passenger wishes to drop the plan of travelling, then this situation may also correspond to one of the switches of the total number of historical transport switches. In an embodiment of the present disclosure, the total number of historical transport switches are identified only for the daily passengers.

Further, the switching probability is determined for each of one or more waiting passengers at the station, based on a function of the delay time, the congestion within the transport and the initial probability, as shown in equation (2) below.

$$P\left(Switch_{waiting\_passenger}/Delay\,time, Congestion\right)$$

$$= \frac{P\left(Delay\,time \mid Switch_{waiting\,passenger}, Congestion\right) * P\left(Switch_{waiting\,passenger} \middle| Congestion\right)}{P\left(Delay\,time \mid Congestion\right)}$$

$$\ldots\ldots\ldots(2)$$

Then, the passenger flow prediction system 201 determines a risk of dropping out of the one or more passengers of the total number of waiting passengers, from boarding the transport. The risk is determined by aggregating the switching probability associated with each of the one or more waiting passengers as shown in equation (3) below.

$$Est.SwTraveller_{Station-A}(t_1 \le t \le t_2) = \sum_{t=t_1}^{t=t_2} \sum_{traveller\,\epsilon\,All\,Travellers} P(Sw_{travller} \middle| Cowd_{station-A,t}, Delay_{station-A,t})$$

$$\ldots\ldots\ldots(3)$$

As seen from equation (3), the switching probability of the waiting passengers is computed for a predefined time period i.e., from time instance t1 to t2. Furthermore, the switching probability is computed for an upcoming station i.e., station A, as shown in equation (3).

Thereafter, the passenger flow prediction system 201 predicts the passenger flow at the station based on the risk determined as computed in equation (3) and the total number of one or more waiting passengers estimated previously. The prediction is performed by computing a waiting passengers count as shown in the below equation (4).

$$Predicted\_waiting\_passenger\_Count(t1 \le t \le t2)$$

$$= Estimated\_Total\_waiting\_passengers$$

$$- Est.Sw_{waiting\_passenger_{station-A}}(t1 \le t \le t2)$$

$$\ldots\ldots\ldots(4)$$

Similar to equation (3), in equation (4) as well, the predicted number of waiting passengers are computed for the predefined time period and for the upcoming station to predict the passenger flow at the station. In this manner, the passenger flow prediction system 201 predicts the number of passengers waiting at the upcoming station by considering the risk of the passengers dropping out due to delay or overcrowding.

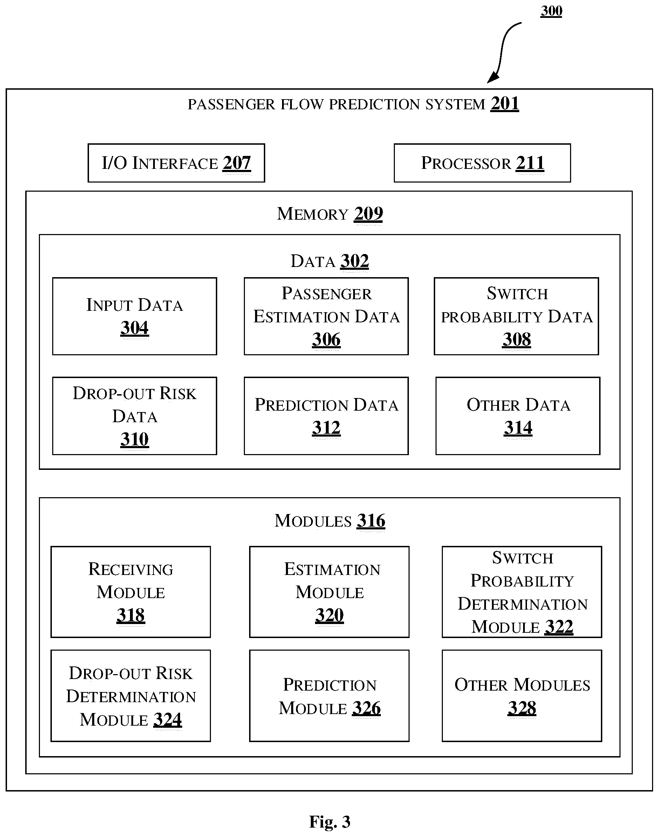

**Fig. 3** illustrates a detailed diagram of a passenger flow prediction system 201 for predicting passenger flow in a transportation system, in accordance with some embodiments of the present disclosure.

In some implementations, the passenger flow prediction system 201 may include data 302 and modules 316. As an example, the data 302 is stored in the memory 209 associated with the passenger flow prediction system 201. In some embodiments, the data 302 may include input data 304, passenger estimation data 306, switch probability data 308, drop-out risk data 310, prediction data 312, and other data 314. In some embodiments, the data 302 may be stored in the memory 209 in form of various data structures.

The input data 304 may include historical travel data associated with the plurality of passengers of a transport. The historical travel data may be used to determine an acceptable delay time and an acceptable transport congestion, which are associated with each of the plurality of passengers. The historical travel data may further include details related to transport status information and passenger location information, which are associated with historical trips of each of the plurality of passengers. The transport status information comprises, but not limited to, location of the transport, weather information, traffic information, and historical congestion information associated with the transport when the passengers previously boarded the transport. Furthermore, the passenger location information may be obtained based on transaction information which further comprises information associated with tickets of the passenger. The passengers may be provided with the tickets on making a payment for their trip. In an embodiment, the passengers may make the payments via cash or Integrated Circuit (IC) cards that belong to the passengers. When the passengers make payments via cash or swipe their IC cards for paying ticket fares before they board the transport, the transaction data is generated for the corresponding trip. In an embodiment, the information associated with tickets may comprise but not limited to, transport number, boarding station, destination station, cost of the ticket, time, and the like.

The passenger estimation data 306 may include total number of passengers that are estimated to be waiting at a station. The passenger estimation data 306 may further comprise a delay time of the transport to arrive at the station and information related to congestion within the transport.

The switch probability data 308 may include one or more switching probabilities that are determined for respective one or more waiting passengers at the station.

The drop-out risk data 310 may include aggregated data of a total number of waiting passengers, which is computed based on the switch probability data 308. The aggregated data is computed by adding each of the one or more switching probabilities associated with the respective one or more waiting passengers.

The prediction data 312 may include a waiting passenger count which is computed based on the passenger estimation data 306 and the drop-out risk data 310.

The other data 314 may be stored data, including temporary data and temporary files, generated by the modules 316 for performing the various functions of the passenger flow prediction system 201.

In an embodiment, the data 302 in the memory 209 are processed by the one or more modules 316 present within the memory 209 of the passenger flow prediction system 201.

One or more modules 316 along with the data 302 functions to predict the passenger flow in the transportation system. In one implementation, the one or more modules 316 may include, but are not limited to, a receiving module 318, an estimation module 320, a switch probability determination module 322, a drop-out risk determination module 324, a prediction module 326, and one or more other modules 328.

In an embodiment, the one or more modules 316 may be implemented as dedicated units. As used herein, the term module refers to an application specific integrated circuit (ASIC), an electronic circuit, a field-programmable gate arrays (FPGA), Programmable System-on-Chip (PSoC), a combinational logic circuit, and/or other suitable components that provide the described functionality. In some implementations, the one or more modules 316 may be communicatively coupled to the processor 211 for performing one or more functions of the passenger flow prediction system 201. The said modules 316 when configured with the functionality defined in the present disclosure will result in a novel hardware.

The receiving module 318 may receive the input data 304 comprising the historical data of the plurality of passengers of a transport. The receiving module 318 may determine the acceptable delay time and the acceptable transport congestion associated with each of the plurality of passengers based on the historical travel data. The acceptable delay time and the acceptable transport congestion are determined based on the transport status information and the passenger location information. The acceptable delay time relates to a time period which is acceptable by the passenger when the transport delays in arriving at the station. The acceptable transport congestion relates to a predefined percentage of crowd in the transport. In an embodiment, the acceptable delay time and the acceptable transport congestion may correspond to predefined threshold values which are associated with each of the plurality of passengers. Therefore, the one or more passengers may decide not to board the transport from the station when the delay time and the congestion within the transport does not satisfy the respective predefined threshold values.

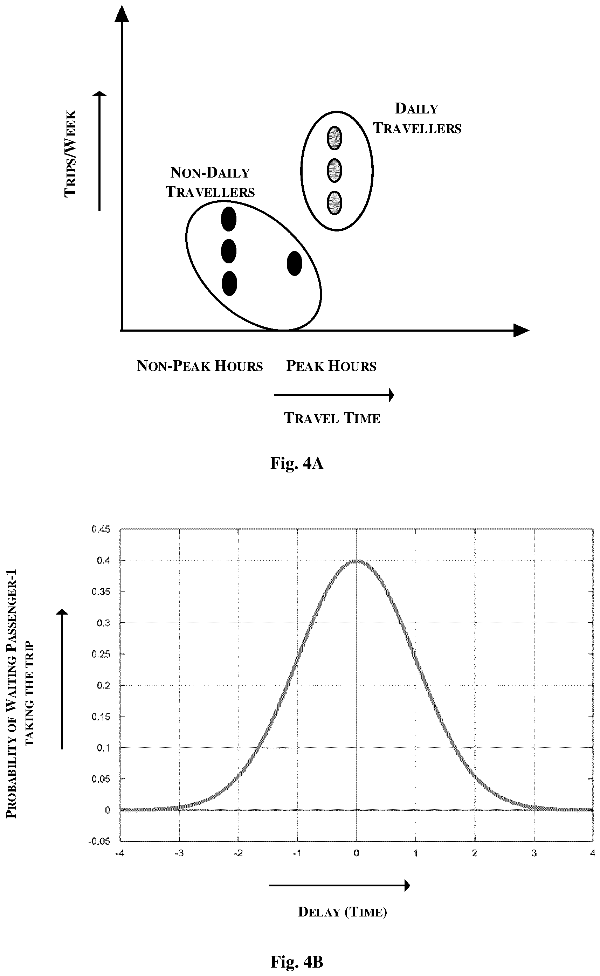

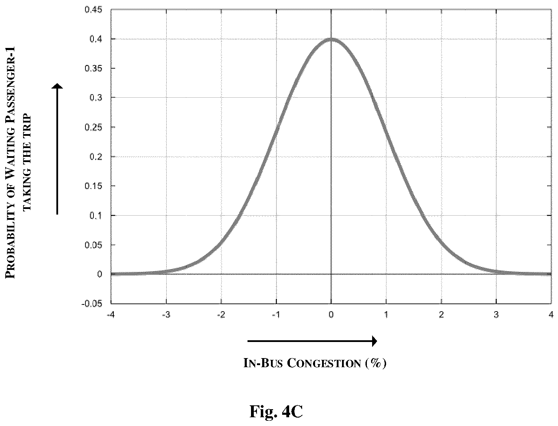

In an embodiment, the receiving module 318 receives the historical data associated with a predefined category corresponding to a category of daily travellers. In an embodiment, a predefined clustering technique such as the k-means clustering technique is used to classify the historical data into the category of daily travellers and a category of non-daily travellers. **Fig. 4A** illustrates a graph showing classified categories of travellers. The two categories as shown in **Fig. 4A** correspond to the daily travellers and the non-daily travellers which are classified based on number of trips taken by the plurality of travellers and the time associated with the trips.

Table 1 as shown below holds exemplary historical data of a waiting passenger "1" who is waiting at a station A. The historical data illustrates decisions made by the waiting passenger "1" during various trips associated with different combinations of the delay time and the congestion within the transport.

**Table 1**

| Day | Historical Delay of Bus - Station A | Historical Congestion in Bus - Station A | Waiting Passenger 1- Travelled |
|---|---|---|---|
| 1 | 2 | 25% | Yes |
| 2 | 5 | 50% | No |
| 3 | 3 | 29% | Yes |
| 4 | 4 | 40% | Yes |
| 5 | 4.5 | 50% | No |
| 6 | 2 | 15% | Yes |
| 7 | 4 | 90% | No |
| 8 | 10 | 30% | No |
| Predefined threshold value | Acceptable delay = 4.3 | Acceptable congestion = 41 % | |

As shown in the Table 1, it is understood that the bus was not boarded by the waiting passenger "1" on the days when the historical delay time and the historical congestion associated with the bus were not within the predefined threshold values associated with the acceptable delay time and the acceptable transport congestion. As seen from Table 1, the acceptable delay time corresponds to 4.3 hours and the acceptable congestion corresponds to 41%. Therefore, the waiting passenger "1" may not board the bus when the threshold values are not satisfied. **Fig. 4B-4C** show graphs for illustrating probabilities of the waiting passenger "1" taking the trip by considering the historical delay time and the historical congestion as per Table 1. It is observed from the graphs that as the historical delay time and the historical congestion increases, the probability of the waiting passenger "1" to take the trip decreases. For example, when the values for the historical delay time and the historical congestion are equal to zero, the probability to take the trip is highest. Thus, the x-axis and the y-axis in the graphs are inversely proportional.

Further, the historical data also includes transport status information, transaction information, historical delay, and historical congestion (not shown in Table 1) which are associated with historical trips of each of the plurality of passengers.

Returning to Fig. 3, the estimation module 320 estimates the total number of waiting passengers at the station based on the historical travel data associated with the one or more passengers of the plurality of passengers waiting at the station for boarding the transport. The estimation module 320 uses the passenger location information which are associated with the historical trips of each of the plurality of passengers for estimating the total number of waiting passengers at the station. For example, the passenger location information comprising transaction information such as, number of tickets sold for a particular destination, time of boarding the transport, and transport number may be considered for estimating the total number of waiting passengers.

Further, the estimation module 320 estimates the delay time of the transport to arrive at the station and the congestion within the transport based on the historical travel data. The estimation module 320 uses the historical delay time and the historical congestion to estimate the delay time and the congestion which correspond to a future state. In other words, the delay time and the congestion are estimated for an upcoming station at which the transport has not yet arrived. Therefore, the estimation module 320 uses at least one of, a predefined statistical technique or a predefined machine learning technique to estimate the delay time and the congestion.

The switch probability determination module 322 determines the switching probability which corresponds to the probability of switching the transport. The switch probability determination module 322 determines the probability of switching the transport for each of the one or more waiting passengers at the station. Further, the switch probability determination module 322 determines the switching probability based on the delay time, the congestion within the transport and, the acceptable delay time and the acceptable transport congestion which are associated with the respective passengers. The switch probability determination module 322 determines the initial probability of switching the transport based on a function of total number of historical transport switches and total historical trips that are associated with the respective one or more waiting passengers. For example, on substituting values as mentioned in Table 2, in equation (1), the initial probability of switching obtained corresponds to 0.5.

$$P\left(Switch_{waiting\_passenger}\right)$$

$$= \frac{Total\ number\ of\ historical\ transport\ switches_{waiting\_passenger}}{Total\ historical\ trips_{waiting\_passenger}}$$

Therefore,

$$P\left(Switch_{waiting\_passenger}\right) = \frac{17}{90} = 0.188889$$

The switch probability determination module 322 determines the switching probability based on a function of the delay time, the congestion within the transport and the initial probability. In an embodiment, the switching probability is determined based on one of, predefined statistical technique or Bayesian probability rule. On substituting values in equation (2), the switching probability obtained for one waiting passenger may correspond to 0.4. Table 2 shows exemplary switching probabilities calculated for ten waiting passengers.

**Table 2**

| Waiting Passenger ID | Probable Switch | Total Trips | P(Switch_{waiting_passenger}) | P(Switch_{waiting_passenger} \| Delay time, Congestion) |
|---|---|---|---|---|
| Passenger -1 | 17 | 90 | 0.188889 | 0.4 |
| Passenger -2 | 15 | 55 | 0.272727 | 0.5 |
| Passenger -3 | 7 | 101 | 0.069307 | 0.1 |
| Passenger -4 | 20 | 98 | 0.204082 | 0.5 |
| Passenger -5 | 5 | 73 | 0.068493 | 0.5 |
| Passenger -6 | 6 | 120 | 0.05 | 0.2 |
| Passenger -7 | 7 | 145 | 0.048276 | 0.1 |
| Passenger -8 | 6 | 82 | 0.073171 | 0.3 |
| Passenger -9 | 14 | 69 | 0.202899 | 0.4 |
| Passenger -10 | 11 | 57 | 0.192982 | 0.3 |

The drop-out risk determination module 324 receives the switch probability data 308 from the switch probability determination module 322. On receiving the switch probability data 308, the drop-out risk determination module 324 determines a risk of dropping out of the one or more passengers of the total number of waiting passengers, from boarding the transport. The drop-out risk determination module 324 aggregates the switching probability associated with each of the one or more waiting passengers. On substituting values in equation (3) from Table 2, the risk is determined as 3.3.

$$Est.Sw_{waiting\_passenger_{station-A}}\ (t1 \leq t \leq t2) = 0.4+0.5+0.1+0.5+0.5+0.2+0.1+0.3+0.4+0.3$$

$$= 3.3$$

Thereafter, the prediction module 326 receives the total number of one or more waiting passengers from the estimation module 320 and further receives the data associated with the risk of dropping out of the passengers from the transport, from the drop-out risk determination module 324. Therefore, based on the received data, the prediction module 326 predicts the passenger flow at the station based on the risk determined as computed in equation (3) and the total number of one or more waiting passengers estimated previously. Hence, upon substituting values in equation (4), the waiting passenger count predicted corresponds to 16.7.

$$Predicted\_waiting\_passenger\_Count(t1 \le t \le t2)$$
$$= Estimated\_Total\_waiting\_passengers$$
$$- Est.Sw_{waiting\_passenger_{station-A}}(t1 \le t \le t2)$$

$$Predicted\_waiting\_passenger\_Count(t1 \le t \le t2) = 20 - 3.3 = 16.7$$

Therefore, in this manner, the waiting passenger count may be predicted for each station that the transport may cover in a day.

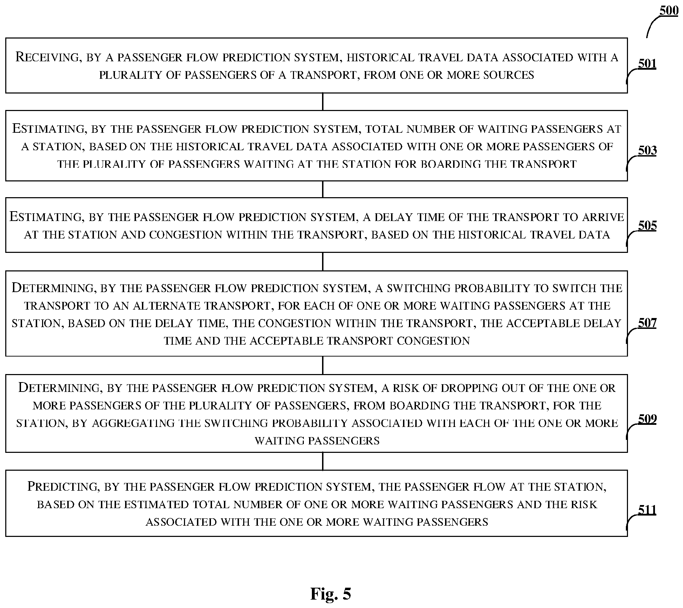

**Fig. 5** shows an exemplary flow chart illustrating method steps for predicting passenger flow in a transportation system, in accordance with some embodiments of the present disclosure. As illustrated in Fig. 5, the method 500 may comprise one or more steps. The method 500 may be described in the general context of computer executable instructions. Generally, computer executable instructions can include routines, programs, objects, components, data structures, procedures, modules, and functions, which perform particular functions or implement particular abstract data types.

The order in which the method 500 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At step 501, the method 500 may include receiving, by a passenger flow prediction system 201, historical travel data associated with a plurality of passengers of a transport, from one or more sources to determine an acceptable delay time and an acceptable transport congestion, associated with each of the plurality of passengers. The acceptable delay time and the acceptable transport congestion correspond to predefined threshold values associated with each of the plurality of passengers.

At step 503, the method 500 may include estimating, by the passenger flow prediction system 201, total number of waiting passengers at a station, based on the historical travel data associated with one or more passengers of the plurality of passengers waiting at the station for boarding the transport. Estimating the total number of waiting passengers comprises identifying the one or more waiting passengers from one or more categories of passengers based on a predefined clustering technique. The one or more categories of passengers comprises daily passengers and non-daily passengers, categorized based on travelling hours.

At step 505, the method 500 may include estimating, by the passenger flow prediction system 201, a delay time of the transport to arrive at the station and congestion within the transport, based on the historical travel data associated with historical trips of each of the plurality of passengers.

At step 507, the method 500 may include determining, by the passenger flow prediction system 201, a switching probability to switch the transport to an alternate transport, for each of one or more waiting passengers at the station, based on the delay time, the congestion within the transport, the acceptable delay time, and the acceptable transport congestion.

At step 509, the method 500 may include determining by the passenger flow prediction system 201, a risk of dropping out of the one or more passengers of the total number of waiting passengers, from boarding the transport, for the station, by aggregating the switching probability associated with each of the one or more waiting passengers.

At step 511, the method 500 may include predicting, by the passenger flow prediction system 201, the passenger flow at the station, based on the estimated total number of one or more waiting passengers and the risk associated with the one or more waiting passengers.

**COMPUTER SYSTEM**

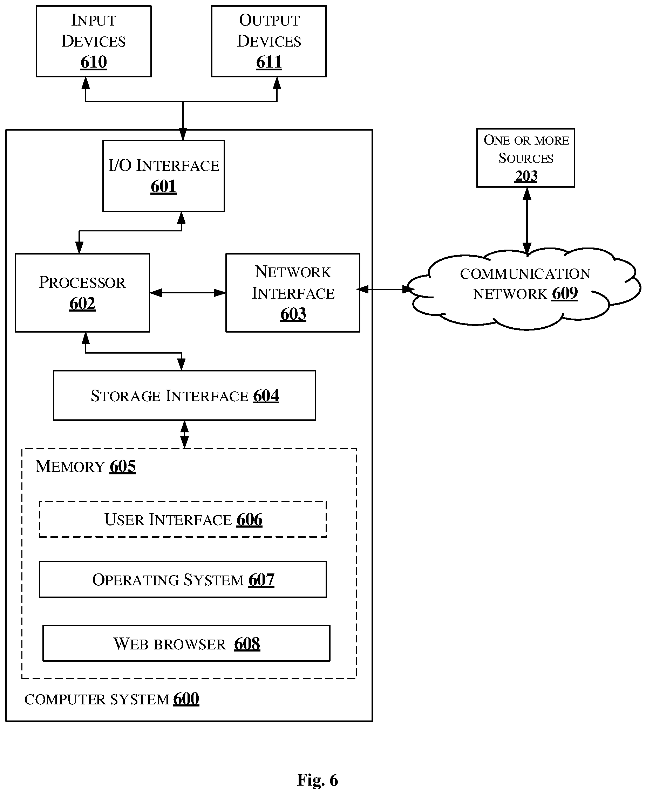

**Fig. 6** illustrates a block diagram of an exemplary computer system 600 for implementing embodiments consistent with the present disclosure. In an embodiment, the exemplary computer system 600 may be the passenger flow prediction system 201. Thus, the exemplary computer system 600 may be used to receive data from one or more sources 203. The exemplary computer system 600 may comprise a Central Processing Unit 602 (also referred as "CPU" or "processor"). The processor 602 may comprise at least one data processor. The processor 602 may include specialized processing units such as integrated system (bus) controllers, memory management control units, floating point units, graphics processing units, digital signal processing units, etc. The processor 606 may be used to realize the processor 211 described in Fig. 2.

The processor 602 may be disposed in communication with one or more input/output (I/O) devices (not shown) via I/O interface 601. The I/O interface 601 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 601, the computer system 600 may communicate with one or more I/O devices. For example, the input device 610 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 611 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 602 may be disposed in communication with the communication network 609 via a network interface 603. The network interface 603 may communicate with the communication network 609. The network interface 603 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 609 may include, without limitation, a direct interconnection, local area network (LAN), wide area network (WAN), wireless network (e.g., using Wireless Application Protocol), the Internet, etc. The network interface 603 may employ connection protocols include, but not limited to, direct connect, Ethernet (e.g., twisted pair 10/100/1000 Base T), transmission control protocol/internet protocol (TCP/IP), token ring, IEEE 802.11a/b/g/n/x, etc.

The communication network 609 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc. The passenger flow prediction system 201 may receive data (historical travel data) from the one or more sources 203, over the communication network 609.

In some embodiments, the processor 602 may be disposed in communication with a memory 605 (e.g., RAM, ROM, etc. not shown in Figure 6) via a storage interface 604. The storage interface 604 may connect to memory 605 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 605 may store a collection of program or database components, including, without limitation, user interface 606, an operating system 607, web browser 608 etc. In some embodiments, computer system 600 may store user/application data, such as, the data, variables, records, etc., as described in this disclosure. Such databases may be implemented as fault-tolerant, relational, scalable, secure databases such as Oracle ® or Sybase®. The memory 605 may be used to realize the memory 209 described in Fig. 2. The memory 605 may be communicatively coupled to the processor 602. The memory 605 stores instructions, executable by the one or more processors 602, which, on execution, may cause the processor 602 to predict the passenger flow.

The operating system 607 may facilitate resource management and operation of the computer system 600. Examples of operating systems include, without limitation, APPLE MACINTOSH$^R$ OS X, UNIX$^R$, UNIX-like system distributions (E.G., BERKELEY SOFTWARE DISTRIBUTION™ (BSD), FREEBSD™, NETBSD™, OPENBSD™, etc.), LINUX DISTRIBUTIONS™ (E.G., RED HAT™, UBUNTU™, KUBUNTU™, etc.), IBM™ OS/2, MICROSOFT™ WINDOWS™ (XP™, VISTA™/7/8, 10 etc.), APPLE$^R$ IOS™, GOOGLE$^R$ ANDROID™, BLACKBERRY$^R$ OS, or the like.

In some embodiments, the computer system 600 may implement the web browser 608 stored program component. The web browser 608 may be a hypertext viewing application, for example MICROSOFT$^R$ INTERNET EXPLORER™, GOOGLE$^R$ CHROME™0, MOZILLA$^R$ FIREFOX™, APPLE$^R$ SAFARI™, etc. Secure web browsing may be provided using Secure Hypertext Transport Protocol (HTTPS), Secure Sockets Layer (SSL), Transport Layer Security (TLS), etc. Web browsers 608 may utilize facilities such as AJAX™, DHTML™, ADOBE$^R$ FLASH™, JAVASCRIPT™, JAVA™, Application Programming Interfaces (APIs), etc. In some embodiments, the exemplary computer system 600 may implement a mail server (not shown in Figure) stored program component. The mail server may be an Internet mail server such as Microsoft Exchange, or the like. The mail server may utilize facilities such as ASP™, ACTIVEX™, ANSI™ C++/C#, MICROSOFT $^R$, NET™, CGI SCRIPTS™, JAVA™, JAVASCRIPT™, PERL™, PHP™, PYTHON™, WEBOBJECTS™, etc. The mail server may utilize communication protocols such as Internet Message Access Protocol (IMAP), Messaging Application Programming Interface (MAPI), MICROSOFT$^R$ exchange, Post Office Protocol (POP), Simple Mail Transfer Protocol (SMTP), or the like. In some embodiments, the computer system 600 may implement a mail client stored program component. The mail client (not shown in Figure) may be a mail viewing application, such as APPLE<sup>R</sup> MAIL™, MICROSOFT<sup>R</sup> ENTOURAGE™, MICROSOFT<sup>R</sup> OUTLOOK™, MOZILLA<sup>R</sup> THUNDERBIRD™, etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

The present disclosure predicts the number of passengers waiting at the upcoming stations by considering the future state associated with the risk of the passengers dropping out due to delay or overcrowding. Hence, the prediction facilitates the transportation system to optimize and adjust long term and short term dispatch plans and maintain suitable schedules for improving the travel experience of the passengers.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article, or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of Fig. 5 show certain events occurring in a certain order. In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subj ect matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

**Referral Numerals:**

| Referral number | Description |
| --- | --- |
| 200 | Exemplary environment |
| 201 | Passenger flow prediction system |
| 203 | One or more sources |
| 205 | Communication network |
| 207 | I/O interface |
| 209 | Memory |

(continued)

| Referral number | Description |
|---|---|
| 211 | Processor |
| 300 | Detailed diagram |
| 302 | Data |
| 304 | Input data |
| 306 | Passenger estimation data |
| 308 | Switch probability data |
| 310 | Drop-out risk data |
| 312 | Prediction data |
| 314 | Other data |
| 316 | Modules |
| 318 | Receiving module |
| 320 | Estimation module |
| 322 | Switch probability determination module |
| 324 | Drop-out risk determination module |
| 326 | Prediction module |
| 328 | Other module |
| 600 | Computer system |
| 601 | I/o interface |
| 602 | Processor |
| 603 | Network interface |
| 604 | Storage interface |
| 605 | Memory |
| 606 | User interface |
| 607 | Operating system |
| 608 | Web browser |
| 609 | Communication network |
| 610 | Input device |
| 611 | Output device |
| 612 | Data items |
| 600 | Computer system |
| 601 | I/o interface |
| 602 | Processor |
| 603 | Network interface |

**Claims**

1. A method of predicting passenger flow in a transportation system, the method comprising:

receiving, by a passenger flow prediction system, historical travel data associated with a plurality of passengers of a transport, from one or more sources to determine an acceptable delay time and an acceptable transport congestion, associated with each of the plurality of passengers;

estimating, by the passenger flow prediction system, total number of waiting passengers at a station, based on the historical travel data associated with one or more passengers of the plurality of passengers waiting at the station for boarding the transport;

estimating, by the passenger flow prediction system, a delay time of the transport to arrive at the station and congestion within the transport, based on the historical travel data associated with historical trips of each of the plurality of passengers;

determining, by the passenger flow prediction system, a switching probability to switch the transport to an alternate transport, for each of one or more waiting passengers at the station, based on the delay time, the congestion within the transport, the acceptable delay time, and the acceptable transport congestion;

determining, by the passenger flow prediction system, a risk of dropping out of the one or more passengers of the total number of waiting passengers, from boarding the transport, for the station, by aggregating the switching probability associated with each of the one or more waiting passengers; and

predicting, by the passenger flow prediction system, a passenger flow at the station, based on the estimated total number of one or more waiting passengers and the risk associated with the one or more waiting passengers.

2. The method as claimed in claim 1, wherein estimating the total number of waiting passengers comprises identifying the one or more waiting passengers from one or more categories of passengers based on a predefined clustering technique.

3. The method as claimed in claim 2, wherein the one or more categories of passengers comprises daily passengers and non-daily passengers, categorized based on travelling hours.

4. The method as claimed in claim 1, wherein determining the switching probability to switch the transport to the alternate transport, by each of the one or more waiting passengers, comprising:

determining an initial probability of switching the transport to the alternate transport, by each of the one or more waiting passengers, based on a function of total number of historical transport switches and total historical trips associated with the respective one or more waiting passengers, wherein the total number of historical transport switches and the total historical trips are determined based on the historical travel data; and

determining the switching probability to switch the transport to the alternate transport, by each of the one or more waiting passengers, based on a function of the delay time, the congestion within the transport and the initial probability.

5. The method as claimed in claim 1, wherein the switching probability is determined using one of, statistical techniques and machine learning techniques.

6. The method as claimed in claim 1, wherein the acceptable delay time and the acceptable transport congestion correspond to predefined threshold values associated with each of the plurality of passengers.

7. The method as claimed in claim 1, wherein the historical travel data comprises transport status information and passenger location information, associated with historical trips of each of the plurality of passengers, and wherein predefined threshold values, associated with the acceptable delay time and the acceptable transport congestion are estimated based on the transport status information and the passenger location information.

8. The method as claimed in claim 7, wherein the transport status information is determined based on, at least one of, location of the transport, weather information, and traffic information.

9. The method as claimed in claim 7, wherein the passenger location information is determined based on, at least one of,

predefined identifiers associated with user devices of each of the plurality of passengers,
transaction information associated with historical trips of each of the plurality of passengers, and
location information from tagging devices of one or more objects associated with each of the plurality of passengers.

10. A passenger flow prediction system for predicting flow of passengers in a transportation system, comprising:

a processor; and
a memory communicatively coupled to the processor, wherein the memory stores processor instructions, which, on execution, causes the processor to:

receive historical travel data associated with a plurality of passengers of a transport, from one or more sources to determine an acceptable delay time and an acceptable transport congestion, associated with each of the plurality of passengers;

estimate total number of waiting passengers at a station, based on the historical travel data associated with one or more passengers of the plurality of passengers waiting at the station for boarding the transport;

estimate a delay time of the transport to arrive at the station and congestion within the transport, based on the historical travel data;

determine a switching probability to switch the transport to an alternate transport, for each of one or more waiting passengers at the station, based on the delay time, the congestion within the transport, the acceptable delay time, and the acceptable transport congestion;

determine a risk of dropping out of the one or more passengers of the plurality of passengers, from boarding the transport, for the station, by aggregating the switching probability associated with each of the one or more waiting passengers; and

predict the passenger flow at the station, based on the estimated total number of one or more waiting passengers and the risk associated with the one or more waiting passengers.

11. The passenger flow prediction system as claimed in claim 10, wherein the processor estimates the total number of waiting passengers by identifying the one or more waiting passengers from one or more categories of passengers based on a predefined clustering technique.

12. The passenger flow prediction system as claimed in claim 11, wherein the one or more categories of passengers comprises daily passengers and non-daily passengers, categorized based on travelling hours.

13. The passenger flow prediction system as claimed in claim 10, wherein the processor determines the switching probability to switch the transport to the alternate transport, by each of the one or more waiting passengers, comprising:

determining an initial probability of switching the transport to the alternate transport, by each of the one or more waiting passengers, based on a function of total number of historical transport switches and total historical trips associated with the respective one or more waiting passengers, wherein the total number of historical transport switches and the total historical trips are determined based on the historical travel data; and

estimating the switching probability to switch the transport to the alternate transport, by each of the one or more waiting passengers, based on a function of the delay time, the congestion within the transport and the initial probability.

14. The passenger flow prediction system as claimed in claim 10, wherein the processor determines the switching probability using one of, statistical techniques and machine learning techniques.

15. The passenger flow prediction system as claimed in claim 10, wherein the acceptable delay time and the acceptable transport congestion correspond to predefined threshold values associated with each of the plurality of passengers.

16. The passenger flow prediction system as claimed in claim 10, wherein the historical travel data comprises transport status information and passenger location information, associated with historical trips of each of the plurality of passengers, and wherein the processor estimates predefined threshold values, associated with the acceptable delay time and the acceptable transport congestion based on the transport status information and the passenger location information.

17. The passenger flow prediction system as claimed in claim 16, wherein the processor determines the transport status information based on, at least one of, location of the transport, weather information, and traffic information.

18. The passenger flow prediction system as claimed in claim 16, wherein the processor determines the passenger location information based on, at least one of,

predefined identifiers associated with user devices of each of the plurality of passengers, transaction information associated with historical trips of each of the plurality of passengers, and

location information from tagging devices of one or more objects associated with each of the plurality of passengers.

**Fig. 1**

**Fig. 2**

300

PASSENGER FLOW PREDICTION SYSTEM 201

| I/O INTERFACE 207 | PROCESSOR 211 |

MEMORY 209

DATA 302

| INPUT DATA 304 | PASSENGER ESTIMATION DATA 306 | SWITCH PROBABILITY DATA 308 |

| DROP-OUT RISK DATA 310 | PREDICTION DATA 312 | OTHER DATA 314 |

MODULES 316

| RECEIVING MODULE 318 | ESTIMATION MODULE 320 | SWITCH PROBABILITY DETERMINATION MODULE 322 |

| DROP-OUT RISK DETERMINATION MODULE 324 | PREDICTION MODULE 326 | OTHER MODULES 328 |

Fig. 3

Fig. 4A

Fig. 4B

**Fig. 4C**

500

| RECEIVING, BY A PASSENGER FLOW PREDICTION SYSTEM, HISTORICAL TRAVEL DATA ASSOCIATED WITH A PLURALITY OF PASSENGERS OF A TRANSPORT, FROM ONE OR MORE SOURCES | 501 |

| ESTIMATING, BY THE PASSENGER FLOW PREDICTION SYSTEM, TOTAL NUMBER OF WAITING PASSENGERS AT A STATION, BASED ON THE HISTORICAL TRAVEL DATA ASSOCIATED WITH ONE OR MORE PASSENGERS OF THE PLURALITY OF PASSENGERS WAITING AT THE STATION FOR BOARDING THE TRANSPORT | 503 |

| ESTIMATING, BY THE PASSENGER FLOW PREDICTION SYSTEM, A DELAY TIME OF THE TRANSPORT TO ARRIVE AT THE STATION AND CONGESTION WITHIN THE TRANSPORT, BASED ON THE HISTORICAL TRAVEL DATA | 505 |

| DETERMINING, BY THE PASSENGER FLOW PREDICTION SYSTEM, A SWITCHING PROBABILITY TO SWITCH THE TRANSPORT TO AN ALTERNATE TRANSPORT, FOR EACH OF ONE OR MORE WAITING PASSENGERS AT THE STATION, BASED ON THE DELAY TIME, THE CONGESTION WITHIN THE TRANSPORT, THE ACCEPTABLE DELAY TIME AND THE ACCEPTABLE TRANSPORT CONGESTION | 507 |

| DETERMINING, BY THE PASSENGER FLOW PREDICTION SYSTEM, A RISK OF DROPPING OUT OF THE ONE OR MORE PASSENGERS OF THE PLURALITY OF PASSENGERS, FROM BOARDING THE TRANSPORT, FOR THE STATION, BY AGGREGATING THE SWITCHING PROBABILITY ASSOCIATED WITH EACH OF THE ONE OR MORE WAITING PASSENGERS | 509 |

| PREDICTING, BY THE PASSENGER FLOW PREDICTION SYSTEM, THE PASSENGER FLOW AT THE STATION, BASED ON THE ESTIMATED TOTAL NUMBER OF ONE OR MORE WAITING PASSENGERS AND THE RISK ASSOCIATED WITH THE ONE OR MORE WAITING PASSENGERS | 511 |

**Fig. 5**

INPUT DEVICES 610

OUTPUT DEVICES 611

I/O INTERFACE 601

ONE OR MORE SOURCES 203

PROCESSOR 602

NETWORK INTERFACE 603

COMMUNICATION NETWORK 609

STORAGE INTERFACE 604

MEMORY 605

USER INTERFACE 606

OPERATING SYSTEM 607

WEB BROWSER 608

COMPUTER SYSTEM 600

Fig. 6

EP 4 557 188 A1

Europäisches
Patentamt

European
Patent Office

Office européen
des brevets

**EUROPEAN SEARCH REPORT**

Application Number

EP 24 20 4891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 134 887 A1 (HITACHI LTD [JP]) 15 February 2023 (2023-02-15) * abstract * * figures 1,3,14 * * paragraph [0001] * * paragraph [0017] * * paragraph [0022] * * paragraph [0026] * * paragraph [0040] * * paragraph [0049] * * paragraph [0060] - paragraph [0061] * * paragraph [0114] - paragraph [0125] * * paragraph [0142] * | 1-18 | INV. G06Q10/04 G06N20/00 G06Q10/08 G06Q50/40 |
| A | TIRACHINI ALEJANDRO ET AL: "Crowding in public transport systems: Effects on users, operation and implications for the estimation of demand", TRANSPORTATION RESEARCH PART A: POLICY AND PRACTICE, [Online] vol. 53, 1 July 2013 (2013-07-01), pages 36-52, XP093260652, AMSTERDAM, NL ISSN: 0965-8564, DOI: 10.1016/j.tra.2013.06.005 Retrieved from the Internet: URL:https://www.researchgate.net/publicati on/264967732_Crowding_in_public_transport_ systems_Effects_on_users_operation_and_imp lications_for_the_estimation_of_demand> [retrieved on 2025-03-18] * abstract * | 1-18 | |

|  |  |  | TECHNICAL FIELDS SEARCHED (IPC) |
|---|---|---|---|
|  |  |  | G06Q G06N |

The present search report has been drawn up for all claims

| Place of search | Date of completion of the search | Examiner |
|---|---|---|
| Munich | 20 March 2025 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 24 20 4891

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2025

| Patent document cited in search report | | Publication date | Patent family member(s) | | Publication date |
|---|---|---|---|---|---|
| EP 4134887 | A1 | 15-02-2023 | EP | 4134887 A1 | 15-02-2023 |
| | | | JP | 7289949 B2 | 12-06-2023 |
| | | | JP | 2023026295 A | 24-02-2023 |

EPO FORM P0459

For more details about this annex : see Official Journal of the European Patent Office, No. 12/82